# EUROPEAN PATENT APPLICATION

(11) **EP 2 284 726 A1**
(43) Date of publication of application: **16.02.2011**
(21) Application number: 10169368.7
(22) Date of filing: 13.07.2010
(51) Int. Cl.: G06F 17/30

(54) **Method and system for navigating data and computer program product using the method**

(30) Priority: 27.07.2009 US 228957 P; 03.02.2010 TW 99103185
(71) Applicant: HTC Corporation, Taoyuan County 330 (TW)
(72) Inventor: Lin, Chun-Fu, Taoyuan City, Taoyuan County 330 (TW); Hsu, Shu-Fang, Taoyuan City, Taoyuan County 330 (TW); Lee, Yu-Cheng, Taoyuan City, Taoyuan County 330 (TW); Chiu, Yung-Hsiang, Taoyuan City, Taoyuan County 330 (TW)
(74) Representative: 2K Patentanwälte Blasberg Kewitz & Reichel

(57) **Abstract**

A method and a system for navigating data and a computer program product using the method are provided. In the method, a search condition is received to search data conforming to the search condition from a database. If the number of the data conforming to the search condition is greater than a threshold, the data are grouped into a plurality of groups according to a grouping rule. A grouping result is displayed, so as to display a name of each of the groups and a specific number of the data in the each of the groups and not display the other data in the each of the groups.

## Description

### BACKGROUND

By employing satellite and wireless technologies, a global positioning system (GPS) can provide a user with precise positioning information. At present, the GPS has been extensively applied to mobile devices in the market. The mobile devices equipped with the GPS not only can perform conventional positioning functions but also achieve advanced route planning, voice navigation, and points of interest search functions when an electronic map and navigation software are also adopted.

A conventional navigation device contains a built-in electronic map and performs route planning and navigation functions. After a user inputs keywords, the navigation device retrieves location information corresponding to the keywords and thereby conducts route planning. Nevertheless, subject to the requirement for compactness, the lightweight, slim, and small mobile devices have display screens with limited size. It is rather inconvenient to input the keywords due to the undersized keyboard. Besides, given that a plurality of location information correspond to the input keywords, the user must read the information by invoking a dragging action, a scrolling action, a panning action, or a sliding action, which is quite troublesome as well. The user may be bored with the excessively frequent dragging, scrolling, panning, or sliding actions. Therefore, it is too diffcult for the user to find the target information if there is too much searched information at a time.

### SUMMARY

Based on the above, the application is directed to a method for navigating data and automatically grouping searched data when the number of the searched data exceeds a threshold, so as to allow a user to read information without conducting dragging, sliding, or scrolling actions, or may reduce the number of times of such actions.

The application is also directed to a system for navigating data and grouping searched data into a plurality of groups, so as to accomplish intuitive navigation.

Specifically, in the application, a method for navigating data is provided. The method is suitable for a mobile device. The methof compries the following steps A data navigating interface is turned on. Data are grouped into a plurality of groups according to a grouping rule if the number of the data is greater than a threshold. A grouping result is displayed, so as to display a name of each of the groups.

According to an example of the application, in the step of turning on a data navigating interface to navigate the data, a first search condition is received. Data conforming to the first search condition are searched from a database. If the number of the data conforming to the first search condition is greater than the threshold, the data are grouped into the groups according to a grouping rule. A grouping result is displayed, a name of each of the groups and a specific number of the data in the each of the groups are displayed and the other data in the each of the groups are not displayed. Wherein, the specific number of the data is less than or equal to the threshold.

According to an example of the application, after the searched data are grouped into the groups, the data in one of the groups are grouped into a plurality of sub-groups according to the grouping rule or another grouping rule if the number of the data in the one of the groups is greater than the threshold. Whether the number of the data in each of the sub-groups is greater than the threshold is further determined. If the number of the data in any of the sub-groups is greater than the threshold, the data in the any of the sub-groups are grouped again until the number of the data in the any of the sub-groups is less than or equal to the threshold.

According to an example of the application, in the step of displaying the grouping result, all of the data conforming to the first search condition are displayed if the number of the data conforming to the first search condition is less than or equal to the threshold. After the grouping result is displayed, the method further comprises receiving an unfolding command to unfold an assigned one of the groups or an assigned one of the sub-groups. All of the data in the assigned one of the groups or the assigned one of the sub-groups are displayed if the number of the data in the assigned one of the groups or the assigned one of the sub-groups is less than or equal to the threshold. On the contrary, if the number of the data in the assigned one of the groups or the assigned one of the sub-groups is greater than the threshold, a name of each of the sub-groups in the assigned one of the groups or the assigned one of the sub-groups and a specific number of the data in the each of the sub-groups are displayed, and the other data in the each of the sub-groups are not displayed.

According to an example of the application, after the unfolding command is received, the method may further comprise receiving a second search condition and searching data conforming to the first search condition and the second search condition from the assigned one of the groups or the assigned one of the sub-groups based on the second search condition. The data conforming to the first search condition and the second search condition are grouped into the sub-groups according to the grouping rule if the number of the data conforming to the first search condition and the second search condition is greater than the threshold.

According to an example of the application, after the first search condition is received, the second search condition may also be received, so as to search data conforming to the second search condition from the data conforming to the first search condition based on the second search condition. The data conforming to the first and the second search conditions are grouped into the groups according to the grouping rule if the number of the data conforming to the first search condition and the second search condition is greater than the threshold.

According to an example of the application, the data are location data.

In the application, a system for navigating data is further provided. The system is installed in a mobile device. The system comprises a data display module and a computing module. The data display module displays a data navigating interface. The computing module determines whether the number of data is greater than a threshold. The computing module groups the data into a plurality of groups according to a grouping rule if the number of the data is greater than the threshold, and the data display module displays a name of each of the groups and not display the other data in the each of the groups if the number of the data is greater than the threshold. Wherein, the specific number of the data is less than or equal to the threshold.

According to an example of the application, the system futher comprises an input module and a search module, a computing module. The input module receives a first search condition. The search module searches data conforming to the first search condition from a database. Accordingly, the computing module determines whether the number of the data conforming to the first search condition is greater than the threshold. If the number of the data conforming to the first search condition is greater than the threshold, the computing module groups the data into the groups according to a grouping rule.

According to an example of the application, the input module further receives an unfolding command to unfold an assigned one of the groups or an assigned one of the sub-groups. The data display module displays all of the data in the assigned one of the groups or the assigned one of the sub-groups if the number of the data in the assigned one of the groups or the assigned one of the sub-groups is less than or equal to the threshold. On the contrary, if the number of the data in the assigned one of the groups or the assigned one of the sub-groups is greater than the threshold, the data display module displays a name of each of the sub-groups in the assigned one of the groups or the assigned one of the sub-groups and a specific number of the data in the each of the sub-groups and not display the other data in the each of the sub-groups.

In the application, a computer program product for performing the method for navigating the data is provided. The computer program product basically comprises a plurality of program instructions (for example, an organization chart establishing program instruction, a table approving program instruction, a setting program instruction, and a deployment program instruction, etc). After the program instructions are loaded into an electronic device and executed, the steps in the aforesaid method for navigating the data may be performed, and the aforesaid system for navigating the data may be fully functioned.

Based on the above, when the number of the navigated data exceeds a threshold, the data are grouped for easy navigation according to this application. As such, the number of times of dragging, sliding, or scrolling display screens may be reduced, and the intuitive grouping result may be furnished.

It is to be understood that both the foregoing general descriptions and the following detailed examples are exemplary and are, together with the accompanying drawings, intended to provide further explanation of technical features and advantages of the application.

### BRIEF DESCRIPTION OF THE DRAWINGS

The accompanying drawings are included to provide a further understanding of the application, and are incorporated in and constitute a part of this specification. The drawings illustrate examples of the application and, together with the description, serve to explain the principles of the application.

FIG. 1 is a flowchart illustrating a method for navigating data according to a first example of the application.

FIG. 2 is a schematic view illustrating data grouping according to the first example of the application.

FIG. 3 is a flowchart illustrating a method for navigating data according to a second example of the application.

FIG. 4 is a schematic view illustrating levels of data grouping according to the second example of the application.

FIG. 5 is a block view illustrating a system for navigating data according to a third example of the application.

FIG. 6 is a block view illustrating a system for navigating data according to a fourth example of the application.

FIG. 7 is a flowchart illustrating a method for navigating data according to the fourth example of the application.

### DESCRIPTION

In general, when a user browses information on a display screen, he or she has to continully dragging, sliding, or scrolling the screen if the number of data displayed in the screen is excessive, which leads to significant time consumption and inconvenient operation. Accordingly, in the application, a method and a system for navigating data and a computer program product using the same are provided. Thereby, the data may be automatically grouped when the number of the data exceeds a threshold, and the browsing or navigating action may be facilitated. To make the technical features of the application more comprehensible, several examples are detailed below.

### First Example

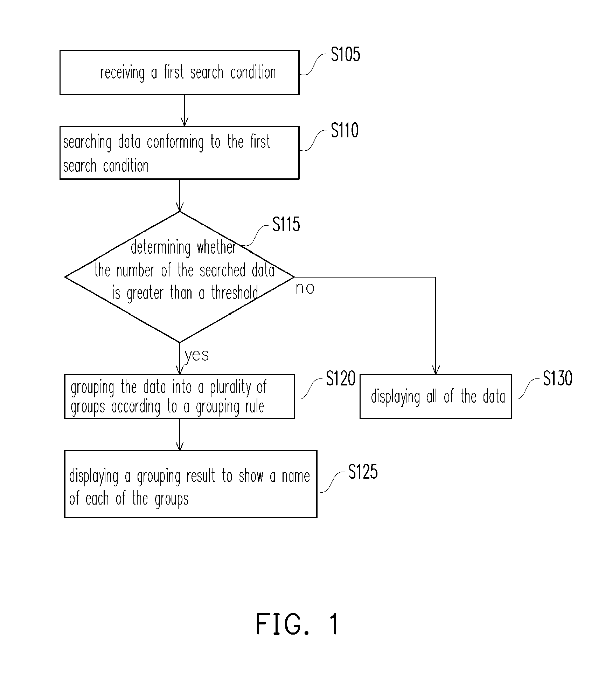

FIG. 1 is a flowchart illustrating a method for navigating data according to a first example of the application. In this example, the method for navigating the data is applicable to a mobile device by which the data (e.g. destination-related location data) may be searched and navigated.

As shown in FIG. 1, in step S105, a first search condition is received. In step S110, data conforming to the first search condition are searched. For instance, data are searched from a database. If the searched data are location data, the first search condition may be keywords directed to a certain group, a certain location (e.g. a gas station or a convenient store), or a certain region (e.g. Taipei, Taichung, or Kaohsiung).

After the first search condition is received, if a second search condition is further received, data conforming to the second search condition are searched from the location data conforming to the first search condition, i.e. the data simultaneously conforming to both the first and the second search conditions are searched.

In the example, the data refer to the location data and there are five databases built in the mobile device. The five databases are a recently-accessed database, a self-built landmark database, a built-in landmark database, a road map database, and an address book database. The number and the types of the databases are, however, not limited in other examples. In these databases, the location data recently selected or read by a user are stored in the recently-accessed database. For instance, a specific number of the most recent data or the location data selected or read within a certain period (e.g. in five days) are stored in the recently-accessed database. Landmarks set by a user are stored in the self-built landmark database, such as a self-built point of interest (POI) database. Landmarks built in the mobile device are stored in the built-in landmark database, such as a built-in POI database. Road data on an electronic map are stored in the road map database. Address data of contact persons set in the mobile device by a user are stored in the address book database.

The types of the above databases may also be defined as the first search condition. That is to say, data may be searched by directly selecting the databases instead of inputting keywords. For example, when the mobile device receives a command to select one of the five databases, all of the location data in the selected database are searched. On the other hand, if the mobile device receives the first search condition which is not directed to selection of any of the databases, whether the location data conforming to the first search condition is determined by searching each of the five databases. Alternatively, the location data conforming to the first search condition may be searched from one of the databases.

In step S115, whether the number of the searched data is greater than a threshold (e.g. 15) is determined. If the number of the data conforming to the first search condition is greater than the threshold, as indicated in step S120, the data are grouped into a plurality of groups according to a grouping rule. In this example, the searched data are location data, and the grouping rule is, for example, geographical location classification, administrative region classification, road classification, road section classification, landmark classification (e.g. a convenient store, a gas station, a bank, a school, a restaurant, a parking lot, and so on), time classification, name classification, alphabetical classification, stroke classification, and phonetic classification, etc.

Wherein, the location data in a region may be categorized into the eastern location, the western location, the southern location, the northern location, and the central location according to the geographical location classification. The administrative region classification comprises different levels, such as country level classification, region level classification, sub-region level classification, and town level classification, so as to define a level of sub-groups in each of the groups based on different levels of the administrative region classification. The time classification may be applied to the recently-accessed database. For instance, the most recently searched location data are grouped by time intervals (e.g. the most recent week). The alphabetical classification is applicable to a database in English interface, and the data may be categorized and grouped by the 26 English alphabets. By contrast, for a database in Chinese interface, the data may be categorized and grouped according to the stroke classification and the phonetic classification. As for the database in other languages, the data may be grouped in accordance with different characteristics of the languages.

If the number of the location data in some of the groups is greater than the threshold, the location data in these groups may be grouped into a plurality of sub-groups according to the grouping rule or another grouping rule. In addition, whether the number of the data in each of the sub-groups is greater than the threshold is further determined. If the number of the data in any of the sub-groups is greater than the threshold, the data in the any of the sub-groups are further grouped until the number of the data in the any of the sub-groups is less than or equal to the threshold.

For instance, as stated above, the location data are first grouped by the types of the databases based on the aforesaid grouping rule. Namely, the first level of classification comprises "recent access," "self-built landmark," "built-in landmark," "road map," and "address book." If the number of the location data searched in these databases is greater than the threshold, the searched data are further grouped based on the administrative region classification, for example. In the second level of classification, the data may be grouped based on the country level of the administrative region classification or directly based on the region level of the administrative region classification. Likewise, if the number of the grouped location data is still greater than the threshold, the searched data are further grouped.

Note that different grouping rules may be applied for different levels of classification. For example, in the first level of classification, the data are grouped into Group 1, Group 2, and Group 3 based on the landmark classification. In the second level of classification, the data in each of Group 1, Group 2, and Group 3 are grouped based on administrative region classification. In the third level of classification, the data are grouped based on the road classification.

On the other hand, the same grouping rule with different levels may also be applied to different levels of classification. For instance, in the first level of classification, the data are grouped into Group 1, Group 2, and Group 3 based on the region level of the administrative region classification. In the second level of classification, the data in each of Group 1, Group 2, and Group 3 are grouped based on the sub-region level of the administrative region classification. In the third level of classification, the data are grouped based on the town level of the administrative region classification. In other words, the same grouping rule or different grouping rules may be alternately applied to different levels of classification.

Besides, when the data in different groups are classified, different grouping rules may be respectively applied to each of the groups. For instance, it is assumed the location data are grouped into the "recently-accessed group, "the "road map group," and the "address book group" based on the types of the databases. The data in the "address book group" may be further classified based on the administrative region classification; the data in the "road map group" may be further classified based on the landmark classification; the data in the "address book group" may be further classified based on the time classification. That is to say, different levels of classification may be performed based on different grouping rules, which is not limited in this application.

As shown in step S125, after the data are grouped, a grouping result is displayed to show a name of each of the groups. Moreover, the grouping result is displayed to show a specific number of the data in the each of the groups and not show the other data in the each of the groups. For instance, the first three data in each of the groups are shown. Wherein, the specific number of the data is less than or equal to the threshold. After the grouping result is displayed, an unfolding command may be further received to unfold an assigned one of the groups or an assigned one of the sub-groups. In an alternative, after the grouping result is displayed, a complete unfolding command is received to unfold all of the data in an assigned one of the groups or an assigned one of the sub-groups.

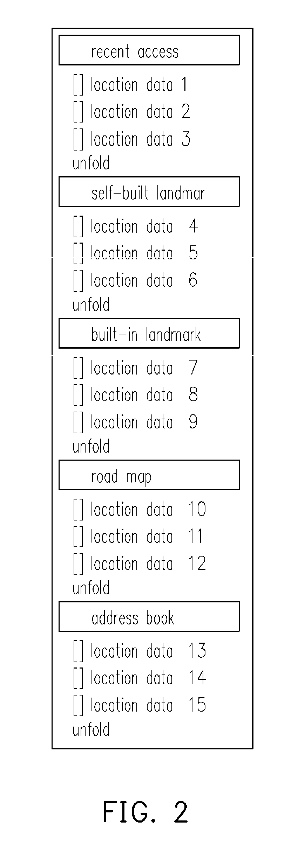

An example is provided below to elucidate the grouping result. FIG. 2 is a schematic view illustrating location data grouping according to the first example of the application. As indicated in FIG. 2, it is assumed that the data are grouped by the types of the databases according to the grouping rule applied to the first level of classification, and the data are grouped into the "recent access" group, the "self-built landmark" group, the "built-in landmark" group, the "road map" group, and the "address book" group. Besides, it is also assumed that the number of the searched location data conforming to the first search condition is greater than the threshold. Therefore, the searched location data are further grouped. Here, a name of each of the groups and three of the location data in the each of the groups are displayed, while the other location data are not displayed. In addition, an unfolding command is available for a user to unfold one of the groups based on the grouping result. Similarly, a complete unfolding command is also available for the user to unfold all of the data in one of the assigned groups without further grouping the data in the assigned group.

Back to step S115, if the number of the data conforming to the first search condition is less than or equal to the threshold, all of the data conforming to the first search condition are displayed, as shown in step S130.

### Second Example

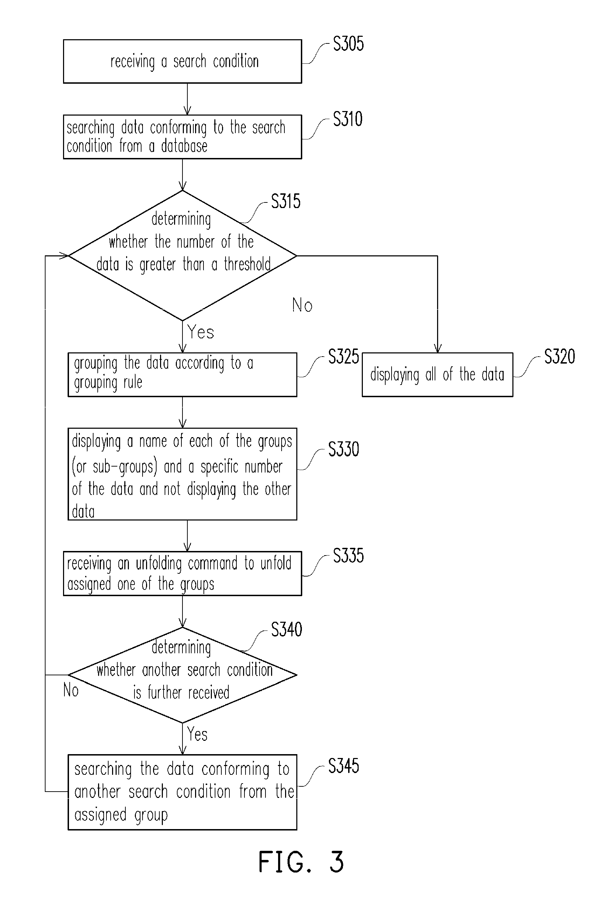

FIG. 3 is a flowchart illustrating a method for navigating data according to a second example of the application. In this example, the method for navigating the data is applicable to a mobile device by which the data (e.g. destination-related location information) may be searched and navigated.

As shown in FIG. 3, in step S305, a search condition is received. In step S310, data conforming to the search condition are searched from a database. In step S315, whether the number of the data is greater than a threshold is determined. If the number of the data is less than or equal to the threshold, all of the data are displayed as indicated in step S320. If the number of the data greater than the threshold, the data are grouped according to a grouping rule, as shown in step S325. In step S330, a name of each of the groups (or sub-groups) and a specific number of the data are displayed, while the other data are not displayed. Step 305-step 330 in this example are identical or similar to step 105-step 130 in the first example, and therefore no further description is provided herein.

After a grouping result is displayed, an unfolding command is received to unfold assigned one of the groups, as indicated in step S335. In step S340, whether another search condition is further received is determined. If no other search conditions are received, whether the number of the data in the assigned group is greater than the threshold is determined, as indicated in step S315. On the contrary, if another search condition is received, step S345 is performed to search the data conforming to the another search condition from the assigned group. Step S315 is then performed to determine whether the number of the data conforming to the another search condition is greater than the threshold.

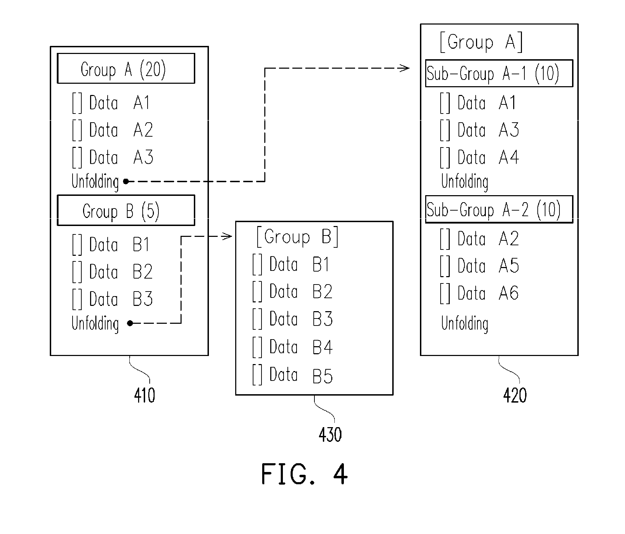

An example is provided below to elucidate the motion of unfolding one of the groups (or sub-groups). FIG. 4 is a schematic view illustrating levels of data grouping according to the second example of the application. Here, the threshold is assumed to be 15. As shown in FIG. 4, a grouping result 410 is obtained by searching data conforming to a search condition from a database. The total number of the searched data is 25 (more than 15), and therefore the data are grouped into Group A and Group B. The grouping result 410 is displayed to show the name of Group A and Group B and three data in each of Group A and Group B. In an example, the name of each of Group A and Group B may be followed by the number of the data in each of Group A and Group B.

When a user intends to further browse each of the groups, an "unfolding" command may be issued to each of the groups. When Group A is unfolded, the data in Group A are further grouped because the number of the data in Group A is still greater than the threshold 15, as indicated in the grouping result 420. On the other hand, when Group B is unfolded, all of the data in Group B are displayed because the number of the data in Group B is less than the threshold 15, as indicated in the grouping result 430. Likewise, since the number of the data in Sub-Group A-1 or Sub-Group A-2 is less than the threshold 15, all of the data in Sub-Group A-1 or Sub-Group A-2 are displayed when Sub-Group A-1 or Sub-Group A-2 is unfolded.

In an example, when the search condition refers to a keyword, the data in the database may be filtered when the first keyword is received, and the data conforming to the first keyword in the database are listed for selection. Thereby, less time is required for inputting the search condition.

### Third Example

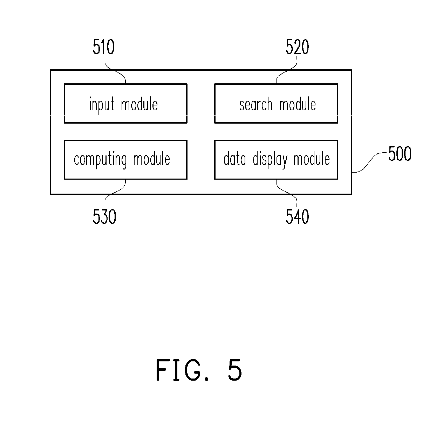

FIG. 5 is a block view illustrating a system for navigating data according to a third example of the application. The system 500 may be installed in a mobile device. Besides, the system 500 comprises an input module 510, a search module 520, a computing module 530, and a data display module 540.

Specifically, the input module 510 receives a first search condition. The search module 520 searches data (e.g. location data) conforming to the first search condition from a database. The computing module 530 determines whether the number of the data conforming to the first search condition is greater than a threshold. If the number of the data conforming to the first search condition is greater than the threshold, the computing module 530 groups the data into a plurality of groups according to a grouping rule. The data display module 540 displays a grouping result. If the number of the data conforming to the first search condition is greater than the threshold, the data display module 540 displays a name of each of the groups and a specific number of the data in the each of the groups and not display the other data in the each of the groups. Here, the specific number of the data is, for example, less than or equal to the threshold. By contrast, if the number of the data conforming to the first search condition is less than or equal to the threshold, the data display module 540 displays all of the data conforming to the first search condition.

Besides, if the number of the data in one or more of the groups is greater than the threshold, the computing module 530 may further group the data in the one or more groups into a plurality of sub-groups according to the grouping rule or another grouping rule. Besides, the computing module 530 may further determine whether the number of the data in each of the sub-groups is greater than the threshold. If the number of the data in any of the sub-groups is greater than the threshold, the computing module 530 further groups the data in any of the sub-groups until the number of the data in the any of the sub-groups is less than or equal to the threshold.

The input module 510 may further receive an unfolding command, such that the computing module 530 unfolds an assigned one of the groups or an assigned one of the sub-groups. The computing module 530 may still determine whether the data in the assigned group or in the assigned sub-group are to be grouped. In addition, the input module 510 may also receive a complete unfolding command, such that the computing module 530 unfolds all of the data in an assigned one of the groups or an assigned one of the sub-groups instead of grouping the data in the assigned one of the groups or the assigned one of the sub-groups.

After receiving the unfolding command, the input module 510 may further receive a second search condition, such that the search module 520 searches data conforming to the first search condition and the second search condition from the assigned one of the groups or the assigned one of the sub-groups based on the second search condition. The computing module 530 then determines whether the data conforming to the first and the second search conditions are to be grouped.

Morever, after receiving the first search condition, the input module 510 may also receive the second search condition, such that the search module 520 searches data conforming to the first and the second search conditions from the data conforming to the first search condition based on the second search condition. The computing module 530 then determines whether the data conforming to the first and the second search conditions are to be grouped.

### Fourth Example

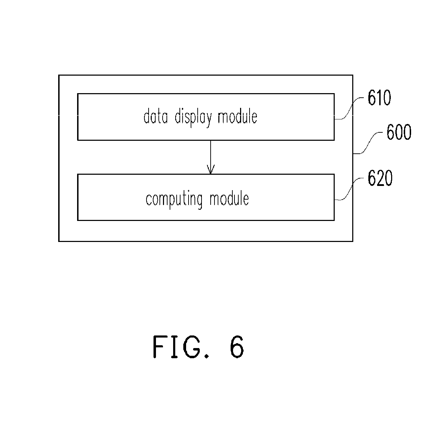

FIG. 6 is a block view illustrating a system for navigating data according to a fourth example of the application. As indicated in FIG. 6, the system 600 for navigating the data may be installed in a mobile device. Here, the system 600 for navigating the data comprises a data display module 610 and a computing module 620. The data display module 610 displays a data navigating interface. The computing module 620 determines whether the number of the data is greater than a threshold. If the number of the data is greater than the threshold, the computing module 620 groups the data into a plurality of groups according to a grouping rule, and the data display module 610 displays a name of each of the groups and a specific number of the data in the each of the groups and not display the other data in the each of the groups. Here, the specific number of the data is less than or equal to the threshold.

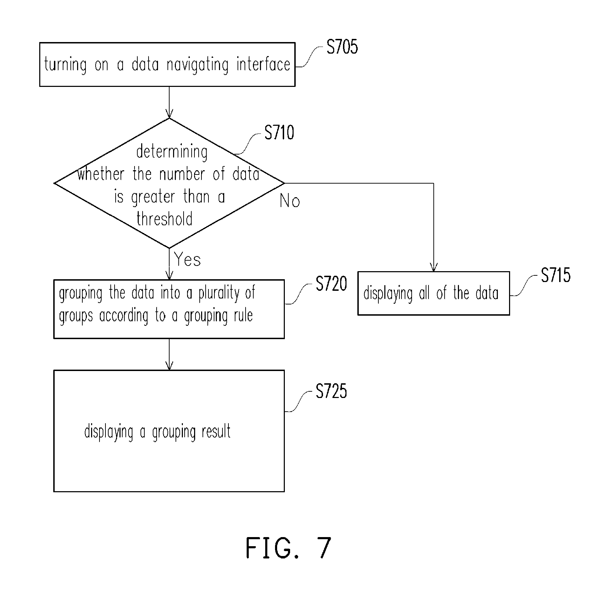

Steps in a method for navigating data are explained in the following example. FIG. 7 is a flowchart illustrating a method for navigating data according to the fourth example of the application.

With reference to FIG. 7, in step S705, a data navigating interface is turned on for navigating data. The navigated data are data in a database, previously navigated data, or previously searched data, which should not be construed as a limitation to this application. In step S710, whether the number of the data is greater than a threshold is determined. If the number of the data is less than the threshold, or less than or equal to the threshold, all of the data are displayed as indicated in step S715. By contrast, in step S720, the data are grouped into a plurality of groups according to a grouping rule if the number of the data is greater than the threshold. A grouping result is displayed in step S725, so as to display a name of each of the groups. Moreover, the grouping result futher displays a specific number of the data in the each of the groups and not display the other data in the each of the groups. Wherein, the specific number of the data is less than or equal to the threshold.

In brief, after the data navigating interface is turned on, the data are directly grouped when the number of the data exceeds the threshold, and a user may directly browse the data without inputting any search condition.

In the application, a computer program product having programs for executing the aforesaid method for navigating data is further provided. The computer program product basically comprises a plurality of program instructions (for example, an organization chart establishing program instruction, a table approving program instruction, a setting program instruction, and a deployment program instruction, etc). After the program instructions are loaded into a mobile device and executed, the steps in the aforesaid method for navigating the data may be performed, and the aforesaid system for navigating the data may be fully functioned.

In light of the foregoing, after the number of the searched data exceeds a threshold, the searched data are grouped. When a user intends to further browse other data in an assigned group or an assigned sub-group, the assigned group or the assigned sub-group is unfolded. Thereby, the number of times of dragging, sliding, or scrolling display screens may be reduced. Besides, the data may be first grouped by the types of the databases, or the system automatically groups the data. Thereby, less time is required for inputting the search condition, and the search may be conducted in a more intuitive manner.

It will be apparent to those skilled in the art that various modifications and variations can be made to the structure of the application without departing from the scope or spirit of the application. In view of the foregoing, it is intended that the application cover modifications and variations of this application provided they fall within the scope of the following claims and their equivalents.

## Claims

1. A method for navigating data, the method being suitable for a mobile device and comprising:
turning (S705) on a data navigating interface to navigate the data;
grouping (S720) the data into a plurality of groups according to a grouping rule if the number of the data is greater than a threshold; and
displaying (S725) a grouping result, comprising:
displaying the name of each of the groups.

2. The method as claimed in claim 1, the step of turning on a data navigating interface to navigate the data further comprising:
receiving (S105) a first search condition; and
searching (S110) data conforming to the first search condition for grouping the data into the groups according to the grouping rule if the number of the data conforming to the first search condition is greater than the threshold.

3. The method as claimed in claim 1 or 2, wherein the step of displaying a grouping result further comprises displaying a specific number of the data in the each of the groups and not display the other data in the each of the groups, wherein the specific number of the data is less than or equal to the threshold.

4. The method as claimed in claim any one of claims 1 to 3, after the step of grouping the data into the groups, the method further comprising:
grouping the data in one of the groups into a plurality of sub-groups according to the grouping rule or another grouping rule if the number of the data in the one of the groups is greater than the threshold.

5. The method as claimed in claim 4, further comprising:
further determining whether the number of the data in each of the sub-groups is greater than the threshold, if the number of the data in any of the sub-groups is greater than the threshold, grouping the data in the any of the sub-groups until the number of the data in the any of the sub-groups is less than or equal to the threshold.

6. The method as claimed in claim 4 or 5, after the step of displaying the grouping result, the method further comprising:
receiving (S335) an unfolding command to unfold an assigned one of the groups or an assigned one of the sub-groups;
displaying all of the data in the assigned one of the groups or the assigned one of the sub-groups if the number of the data in the assigned one of the groups or the assigned one of the sub-groups is less than or equal to the threshold; and
displaying a name of each of the sub-groups in the assigned one of the groups or the assigned one of the sub-groups and a specific number of the data in the each of the sub-groups and not displaying the other data in the each of the sub-groups if the number of the data in the assigned one of the groups or the assigned one of the sub-groups is greater than the threshold.

7. The method as claimed in claim 6, after the step of receiving the unfolding command, the method further comprising:
further receiving a second search condition;
searching data conforming to the first search condition and the second search condition from the assigned one of the groups or the assigned one of the sub-groups based on the second search condition; and
grouping the data conforming to the first search condition and the second search condition into the sub-groups according to the grouping rule if the number of the data conforming to the first search condition and the second search condition is greater than the threshold.

8. The method as claimed in any one of claims 2 to 7, after the step of receiving the first search condition, the method further comprising:
further receiving a second search condition;
searching data conforming to the second search condition from the data conforming to the first search condition based on the second search condition; and
grouping the data conforming to the first search condition and the second search condition into the groups according to the grouping rule if the number of the data conforming to the first search condition and the second search condition is greater than the threshold.

9. The method as claimed in claim any one of claims 1 to 8, in the step of displaying the grouping result, the method further comprising:
displaying (S130) all of the data conforming to the first search condition if the number of the data conforming to the first search condition is less than the threshold.

10. A computer program product, comprising instructions for being loaded into a mobile device to enable the mobile device to execute the method for navigating data as claimed in any one of claims 1 to 9.

11. A system for navigating data, the system being installed in a mobile device and comprising:
a data display module (540, 600) displaying a data navigating interface; and
a computing module (530, 620) determining whether the number of the data is greater than a threshold, the computing module (530, 620) grouping the data into a plurality of groups according to a grouping rule if the number of the data is greater than the threshold, the data display module (540, 600) displaying a name of each of the groups and a specific number of the data in the each of the groups and not displaying the other data in the each of the groups if the number of the data is greater than the threshold, wherein the specific number of the data is less than or equal to the threshold.

12. The system as claimed in claim 11, further comprising:
an input module (510) receiving a first search condition;
a search module (520) searching data conforming to the first search condition from a database;
wherein the computing module (530, 620) determining whether the number of the data conforming to the first search condition is greater than the threshold and grouping the data into the groups according to the grouping rule if the number of the data conforming to the first search condition is greater than the threshold.

13. The system as claimed in claim 11 or 12, wherein if the number of the data in one of the groups is greater than the threshold, the computing module (530, 620) further groups the data in the one of the groups into a plurality of sub-groups according to the grouping rule or another grouping rule.

14. The system as claimed in claim 13, wherein the computing module (530, 620) further determines whether the number of the data in each of the sub-groups is greater than the threshold, and if the number of the data in any of the sub-groups is greater than the threshold, the computing module (530, 620) groups the data in the any of the sub-groups until the number of the data in the any of the sub-groups is less than or equal to the threshold.

15. The system as claimed in claim 13 or 14, the input module (510) further receiving an unfolding command to unfold an assigned one of the groups or an assigned one of the sub-groups,
wherein the data display module (540, 600) displays all of the data in the assigned one of the groups or the assigned one of the sub-groups if the number of the data in the assigned one of the groups or the assigned one of the sub-groups is less than or equal to the threshold, and the data display module (540, 600) displays a name of each of the sub-groups in the assigned one of the groups or the assigned one of the sub-groups and a specific number of the data in the each of the sub-groups and not display the other data in the each of the sub-groups if the number of the data in the assigned one of the groups or the assigned one of the sub-groups is greater than the threshold.
